# EUROPEAN PATENT SPECIFICATION

(11) **EP 2 252 422 B1**
(45) Date of publication and mention of the grant of the patent: **20.06.2012**
(21) Application number: 09710331.1
(22) Date of filing: 10.02.2009
(51) Int. Cl.: B23D 21/10

(54) **CUTTING TOOL**
SCHNEIDWERKZEUG
OUTIL DE COUPE

(30) Priority: 12.02.2008 GB 0802564; 23.09.2008 GB 0817402; 14.11.2008 GB 0820832
(43) Date of publication of application: 24.11.2010
(73) Proprietor: Scott Cutters UK Limited, Marlow Buckinghamshire SL7 3BZ (GB)
(72) Inventor: RAMPLING, Scott, Essex IG3 9BU (GB); FIDLER, Laurence, Essex RM1 3HE (GB); WHITTAKER, Kenneth, Berkshire SL6 8RS (GB)
(74) Representative: Parry, Christopher Stephen
(86) International application number: PCT/GB2009/000374
(87) International publication number: WO 2009/101396

(56) References cited:
- WO-A-87/02614
- WO-A-90/05610
- DE-A1- 19 710 568
- FR-A- 2 116 634
- US-A- 3 636 629

## Description

The present invention relates to cutting tools, in particular but not exclusively, for cutting tubular conduits or pipes.

Plumbing systems have conventionally used copper piping to feed water in water and central heating systems. Copper having become expensive, pipes of plastics material are increasingly used.

Cutting tools for cutting piping have hitherto involved a metallic support carrying a pair of spaced rollers for supporting the pipe to be cut. The support also carries a rotatably supported cutting disc for engaging the side of the pipe opposite that carried by the rollers. A screw mechanism allows the disc to be progressively advanced towards the rollers and into engagement with the pipe. Rotation of the tool about the pipe will create a circular score line in the pipe. An incremental advance of the disc will allow it to bite deeper into the pipe so that on rotation the whole score line is deepened. The process of incrementally advancing the disc and rotating the tool will eventually result in the total severance of the pipe into two lengths. Tools of this kind are disclosed in WO-A-90/05610.

The tool is relatively expensive and its operation somewhat tedious. Also, when used with pipes of plastics, the pressure exerted by the tool can cause deformation of the pipe.

FR-A-2116634 discloses a bladed device for cutting a cylindrical portion of a wall of a container, for example the neck of a sealed plastic container. The device comprises an arcuate resilient body supporting a cutting blade. The chord of the arc is shorter than the diameter of the portion of wall to be cut so that the body is elastically deformed as the container is pushed through the opening. Perforation of the container is achieved by the user clamping the branches of the device against the container and turning the device, the wall of the container flexing under the pressure of the blade, the corner of which can then attack the flexed portion at right angles.

A tool as set out in the preamble to claim 1 is disclosed in US-A-3,636,629.

It is an object of the present invention to provide an improved cutting tool.

According to the present invention there is provided a tool for cutting a cylindrical conduit having a predetermined external diameter, said tool comprising a body having a bore of a diameter substantially equal to said predetermined diameter and extending along a predetermined axis through the body, a slot extending from an external surface of the body to the bore in the general direction of a first plane containing said axis, and a cutting blade extending into said bore along a plane extending at right angles to said predetermined axis by an amount exceeding the thickness of the wall of the conduit characterised in that; said slot tapers so that its width progressively diminishes with distance from the external surface of the body to the external circumference of said bore, said width at said external surface of the body exceeding said predetermined diameter, and at said bore being smaller than said predetermined diameter; in that the body is formed from two similar half portions mounted together side by side along the axis and supporting the cutting blade sandwiched between them in that the body is formed by a first segment on one side of the slot which is generally rigid and inflexible and a second segment on the other side of the slot which is resilient and flexible; whereby the progressive insertion of a conduit into the bore along the slot will cause the second segment initially to flex away from the first segment until the conduit enters the bore whereafter the second segment will resile and urge the conduit against the blade, so that relative rotation between the tool and the pipe about the predetermined axis will result in the severing of the conduit; in that the second segment is made of the same material as the first segment but is hollow so as to define inner and outer walls sufficiently thin to provide the necessary flexibility and resilience.

A cutting tool embodying the present invention, will now be described, by way of example, with reference to the accompanying diagrammatic drawings, in which:
Figure 1 is a perspective view of a first embodiment of the tool;
Figure 2 is a front elevation of the tool of Figure 1;
Figures 3a to 3e are a series of views of the tool of Figure 1 in different operative positions;
Figure 4 is a perspective view of a second embodiment of the tool;
Figure 5 is a front elevation of the tool of Figure 4;
Figures 6 and 7 are respectively a front elevation and an axial section through a keep cylinder for the tool;
Figures 8 and 9 are respectively a front elevation and an axial section through a corrugated conduit;
Figure 10 is a perspective view of a third embodiment of the tool for cutting the conduit of Figures 8 and 9; and
Figure 11 is a perspective view of the tool of Figure 10 when engaged by the conduit of Figures 8 and 9.
Figures 12 and 13 are respectively front elevation views of a dispensing container and nozzle therefor;
Figure 14 is a perspective view of a fourth embodiment of the invention; and
Figure 15 is a perspective view of a fifth embodiment of the invention.

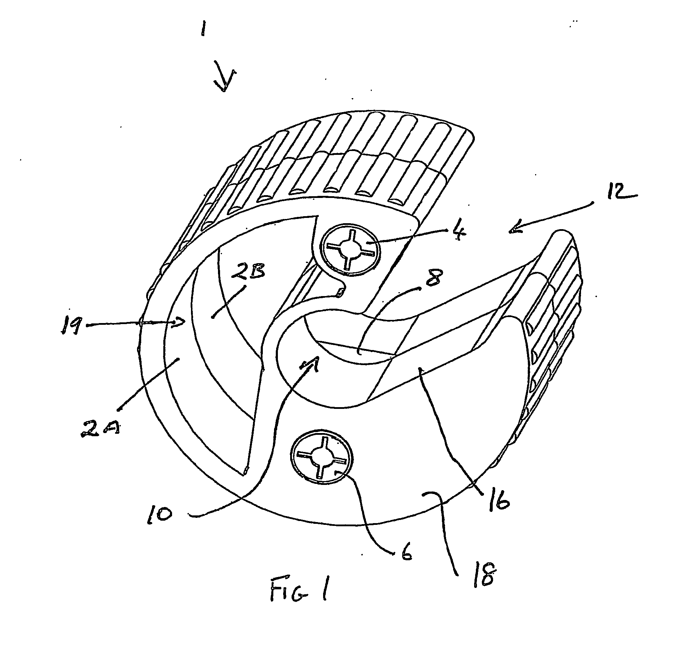

The tool of Figure 1 comprises a generally cylindrical body 1 having two similar half portions 2A and 2B, each being generally cylindrical, lying side by side along a common axis, and being bolted together with a pair of bolts 4 and 6 at diametrically opposite positions. Each half portion 2A and 2B has a central bore or cylindrical opening 10 having substantially the same diameter as the outer diameter of the plastics pipe, it is intended to sever. Sandwiched between the two half portions 2A and 2B is a metal cutting blade 8 having a cutting edge which extends into the bore 10 by an amount exceeding the thickness of the pipe that it is intended to cut.

Each half portion 2A, 2B has a radially inwardly extending slot 12 which extends from the outer circumference of the portion to the outer circumference of the bore 10. The slot 12 is tapered and reduces in width with distance from the outer circumference of the portion towards the bore 10. The width of the slot 12 at the outer circumference is larger than the outer diameter of the pipe to be cut by preferably up to 10% and at the outer circumference of the bore the width of the slot is smaller than the diameter of the pipe to be cut by, advantageously, at least 10% but preferably by at least 5% sufficient to retain the pipe during cutting.

While the slot 12 extends generally radially inwardly, one side wall 16 has at least a portion adjacent the point at which it joins the bore 10, that is tangential to the bore 10 at that point. The segment 18 of the portion 2A (hereinafter referred to as 'the first segment') that is in part defined by the side wall 16, is solid and is generally inflexible. The remaining segments 19 of the portion 2A (hereinafter referred to as 'the second segment') is hollow and has a relatively thin outer wall 20 and a relatively thin radially inwardly displaced inner wall 22. This allows the distal end of the second segment 19 to flex away from the distal end of the first segment 18 and resile under its inherent resilience back again.

The opposite side wall 26, of the slot 12 to the side 16, extends generally radially inwardly to intersect the bore 10 substantially at right angles to its circumference and so forms a nose 30 at the junction of the slot and bore that faces the side wall 16. When the tool is in a relaxed state, the nose 30 is spaced from the side wall by a distance less than the diameter of a pipe to be cut. However, when a pipe is placed on the side wall 16 and displaced inwardly along the side, it will engage the nose 30 and through flexture of the inner and outer walls 20 and 22, will be displaced away from the side wall 16 until the pipe passes into the bore at which point the nose will snap back towards its relaxed state to hold the pipe captive in the bore 10.

When the pipe initially engages the bore 10, it initially engages the blade and so is held from being fully accommodated in the bore 10. The nose 30 will at this point still be acting under the resilience of the walls 20 and 22 to urge the pipe against the blade. Any rotation of the tool relative to the pipe Will cause the blade to progressively score the pipe under the pressure applied by the nose until the blade has cut through the wall of pipe whereupon the pipe is fully accommodated within the bore but is severed into two parts.

Depending upon the flexibility and resilience of the material used for the two portions 2A and 2B, the nose 30 may be profiled to have a greater or lesser prominence.

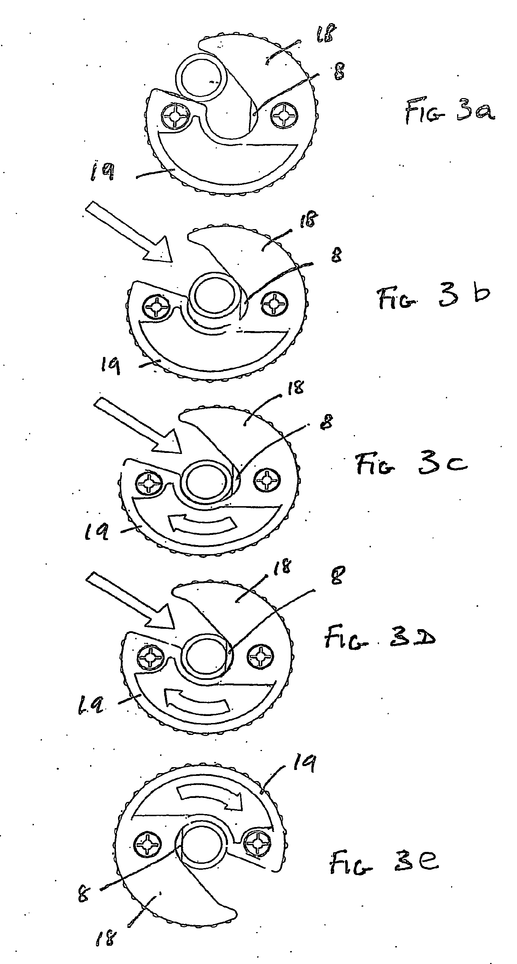

The operation of the tool can be more completely and clearly seen from Figures 3a to 3e.

As shown in Figure 3a, the pipe is caused to enter the slot 12. By pushing the pipe into the slot, it displaces the nose 30 and engages the blade 8. Further displacement of the pipe along the blade 8 causes further flexure of the nose 30 away from the blade 8 until the pipe is snugly engaged in that part of the bore 10 defined by the second segment 19 (see Figure 3c). The pressure on the pipe exerted by nose 30 will now cause the blade to enter the pipe locally (see Figure 3d). Rotation of the tool about the pipe will cause the blade to sever the pipe progressively along its circumference (see Figure 3e). Depending upon the thickness of the pipe, the tool may need to be turned about the pipe several times to ensure complete severing of the pipe.

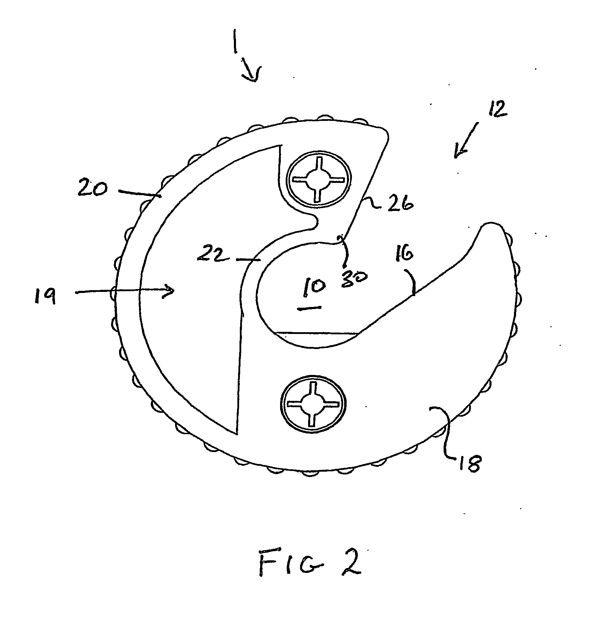

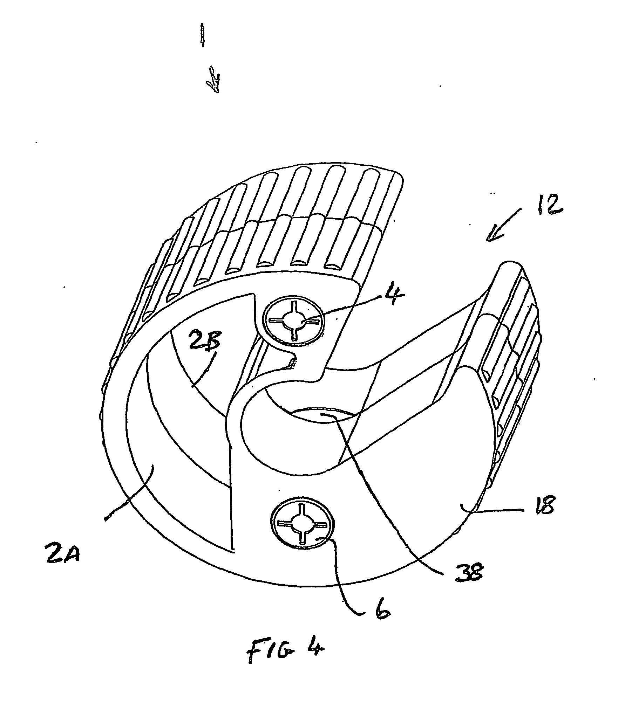

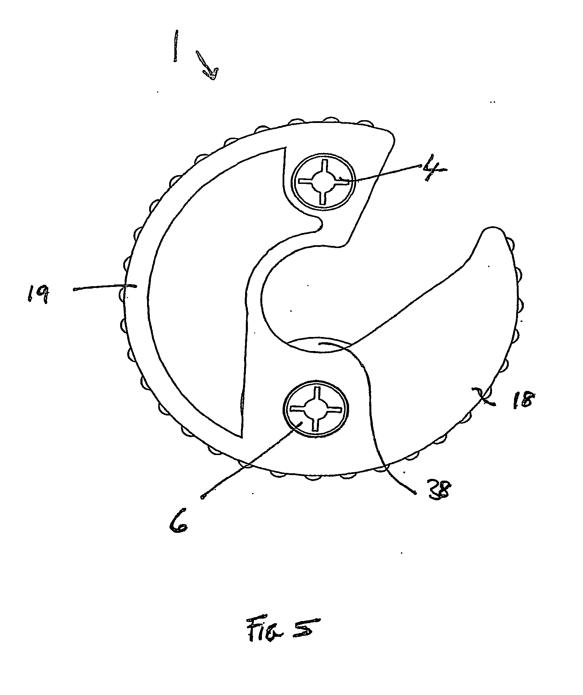

In the second embodiment shown in Figures 4 and 5, parts similar to those in Figures 1 and 2 are similarly referenced. The main difference in this embodiment is that the fixed blade 8 of Figures 1 and 2 is replaced by a circular blade 38 which is rotatably supported by the portion 2A and 2B.

Using a specially hardened rotary blade 38 enables the tool to cut more demanding materials such as pipes made of copper.

Instead of a rotary circular blade, a fixed blade having an arcuate profile in the slot similar to that of the rotary blade may be used.

It will be appreciated that while the tool is of a generally cylindrical configuration, it can have other profiles such as ovaloid or cubic.

It will be appreciated that the tool described is intended to cut one size of pipe only. Different sized tools are needed to cut other sizes of pipe.

The body has a knurled outer surface to ease gripping.

The body is preferably made of nylon or other suitable resilient plastic.

With the tools of Figures 1 and 2 the cutting blades 8 and 38 are exposed and liable to cut the finger of any operator who injudiciously places his finger into the slot 12. To avoid this danger, a keep cylinder 40 is provided to be located in the slot 8 or 38 to cover the blade when the tool is not being used.

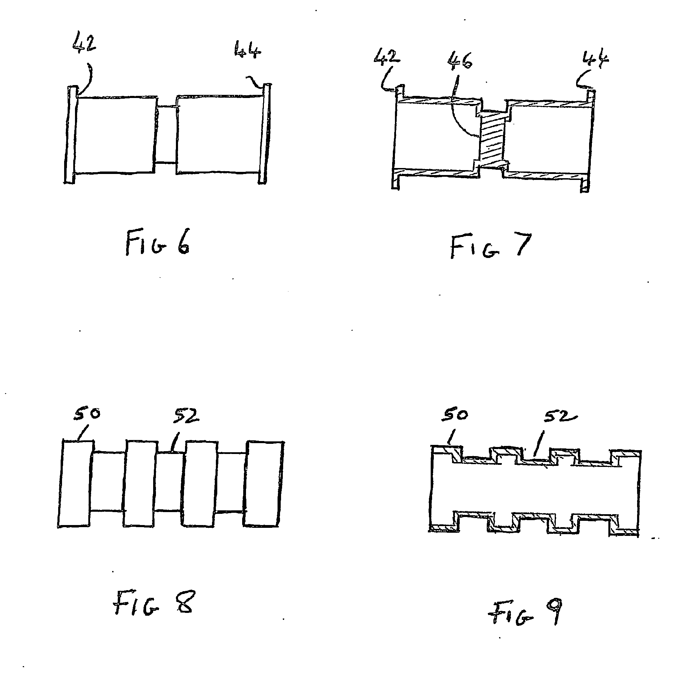

As shown in Figures 6 and 7, the keep cylinder comprises a cylinder body having radially outwardly extending flanges 42 and 44 at opposite ends and a grooved central section 46 midway between the flanges 42 and 44. The cylinder body is sized to be accommodated within the bore 10 with the flanges 42 and 44 abutting opposite sides of the tool to lock the keep cylinder against axial movement relative to the tool. The groove is of sufficient depth to accommodate the cutting blade 8 or 3. While the keep cylinder is generally hollow, the portion 46 forming the base of the groove is solid to provide rigidity. The keep cylinder is advantageously of soft flexible plastics.

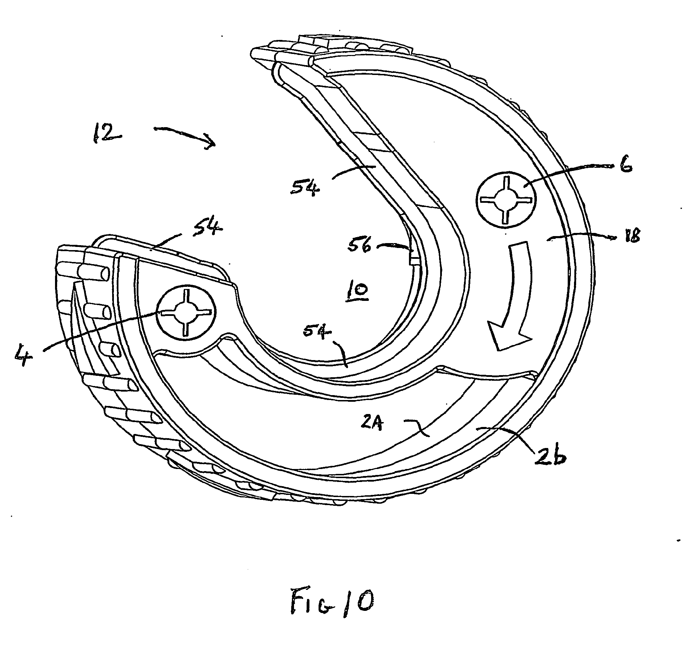

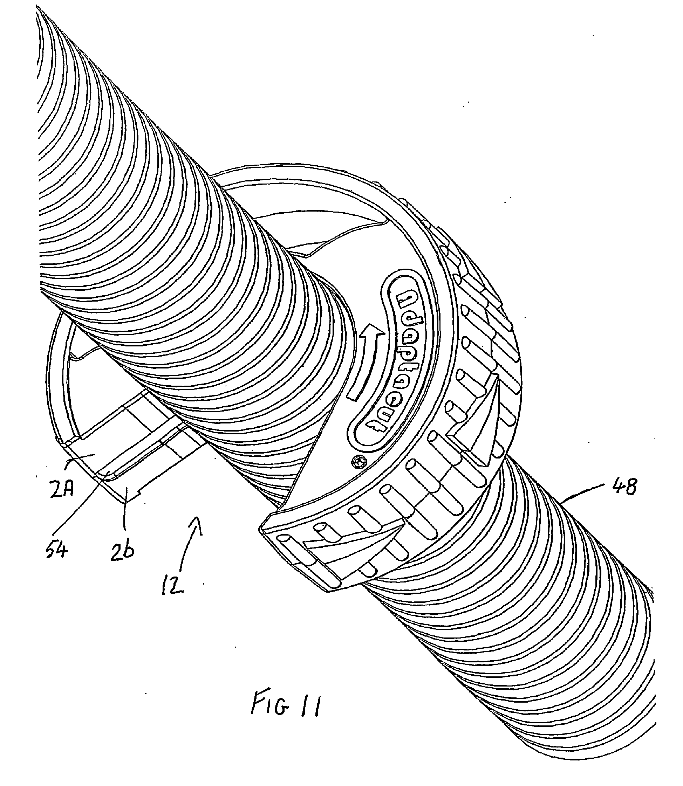

In the third embodiment, shown in Figures 10 and 11, parts similar to those in Figure 1 are similarly referenced. This tool is designed to cut so-called corrugated pipes of the type shown in Figures 8 and 9.

As shown, such pipes 48 consist of a series of axially spaced peaks 50 and troughs 52 to allow the pipe to be bent, concertina fashion, away from its central axis so that the pipe can follow an arcuate path.

Such pipes need to be cut to length by severing the pipe at right angles to their central axis either in a trough or on a peak. In order to ensure that the cutting blade of the tool is aligned with the desired cutting position, the tool is provided with a radially inwardly extending rib 54 which extends along one side of the slot 12 around the bore 10 and then along the other side of the slot 12. Embedded in and standing proud of the rib is a cutting blade 56.

In operation, the corrugated pipe is inserted into the tool by causing the portions of the rib 54 on opposite sides of the slot to engage the trough located where the pipe is to be cut. Then pressing the pipe to be cut into the bore will cause the cutting blade 56 to engage the pipe. Relative rotation of the pipe against the blade will produce a circular cut around the pipe. Multiple ribs may serve the same purpose. The blade in this embodiment is situated in the centre of a rib but may be located to either side of the guide rib or ribs.

The portion of the cutting blade 56, which projects from the rib 54, may be straight or triangular in profile with the exposed sides of the triangle, one or each, defining a cutting edge. One cutting edge may extend generally radially of the bore while the other cutting edge may extend generally circumferentially at the bore. The two edges extend generally at right angles to each other.

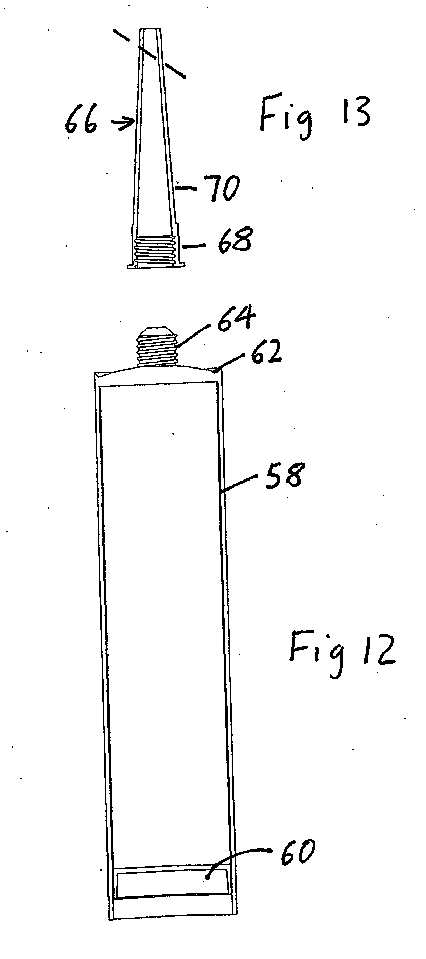

Various flowable and semiflowable materials, particularly in the building trade are traditionally marketed in sealed cartridges. Such cartridges as shown in Figure 12 generally take the form of a cylindrical body 58 containing a displaceable piston 60 at one end and have a dispensing cap 62 at the opposite end with the material to be dispensed sandwiched in between.

The cap 62 supports an outwardly projecting dispensing tube 64 which is externally screw threaded and sealed at its distal end. A dispensing nozzle 66 (see Figure 13) is provided to be screw threadedly mounted on the dispensing tube 64.

The nozzle 66 has a cylindrical end portion 68 with an internal screw thread adapted to screw threadedly engage the tube 64 of the cap 62 and a tapered portion 70 extending away from the cylindrical end portion 68 so that both internal and external diameters progressively reduce with distance from the cylindrical end portion 68. The distal end of the tapered portion may be open or sealed.

To make the cartridge ready for use the end of the dispensing tube needs to be severed at right angles to its axis to release the material within the body 58. Also the tapered portion 70 of the nozzle 66 needs to be severed to provide the appropriate size of dispensing orifice from the nozzle. The nozzle is preferably severed along a plane included to the axis of the nozzle to provide a guide surface to guide the direction in which the material is dispensed.

The tools described in Figures 1 to 5 are particularly suitable for serving the end of the dispensing tube.

However frequently cartridges of the type described come in two sizes each having a dispensing tube of different diameters.

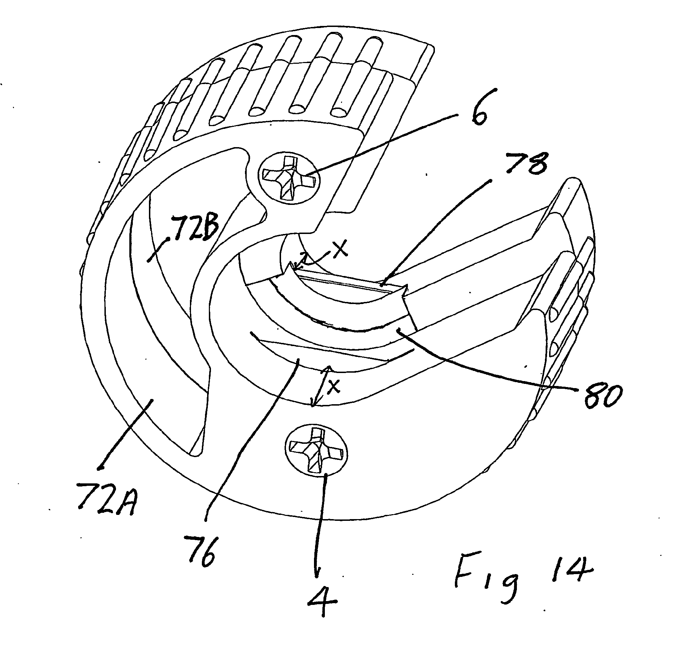

The tool shown in Figure 14 can deal with this problem. As with the tool in Figure 1 the tool consists of two half portions 72A and 72B lying side by side along a common axis and being bolted together along the common axis with a pair of bolts 4 and 6 at substantially diametrically appropriate positions. While the portions 72A and 72B are generally similar in profile to the portions 2A and 2B of Figure 1 they differ in three major respects. Firstly they have different sized bores and slots with each half portion being sized to accommodate a respective one of two differently sized dispensing tubes. Secondly instead of a single cutting blade being sandwiched between the two half portions, each half portion 72A and 72B carries its own blade 76, 78 embedded therein at a location between opposite axial ends. Thirdly the portion 72B having the smaller bore is provided with a well or recess 80 extending between the blade 78 and the adjacent portion 72A and sized to receive the end portion of the dispensing tube having the larger outer diameter. The severing of the dispensing tubes is carried out in the same manner as described in connection with the tool of Figure 1 with the exception that different ends of the tube are used for differently sized cartridges.

The two blades 76 and 78 are preferably spaced equidistantly from outer end faces of the tool.

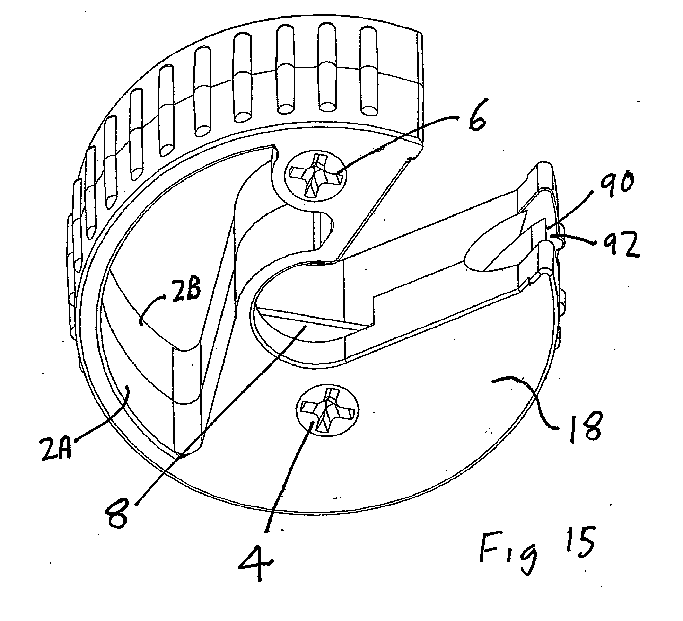

Figure 15 shows the tool of Figures 1 to 3 modified to incorporate a secondary cutting blade for severing the nozzle of Figure 13.

As shown parts similar to those in Figures 1 to 3 are similarly referenced. The adjoining faces of the two part segments 18 of the two portions 2A and 2B are recessed to define a channel 92 sized to accommodate tapered portion 70 the nozzle 66. The secondary cutting blade is mounted to extend across the channel to lie in a plane extending through the axis, or parallel to the axis, of the tool. In operation the nozzle is placed in the channel and drawn along the channel to cause the blade to sever the end of the tapered portion at an appropriate angle.

It will be appreciated that the secondary blade 90 can also be incorporated into the other embodiments of the tool described herein.

The recessed location of the secondary blade in a channel provides a degree of protection against the blade harming the user.

## Claims

1. A tool for cutting a cylindrical conduit having a predetermined external diameter, said tool comprising a body (1) having a bore (10) of a diameter substantially equal to said predetermined diameter and extending along a predetermined axis through the body, a slot (12) extending from an external surface of the body to the bore in the general direction of a first plane containing said axis, and a cutting blade (8) extending into said bore along a plane extending at right angles to said predetermined axis by an amount exceeding the thickness of the wall of the conduit; **characterised in that**:
said slot tapers so that its width progressively diminishes with distance from the external surface of the body to the external circumference of said bore, said width at said external surface of the body exceeding said predetermined diameter, and at said bore being smaller than said predetermined diameter;
**in that** the body is formed from two similar half portions (2A, 2B) mounted together side by side along the axis and supporting the cutting blade (8) sandwiched between them;
**in that** the body is formed by a first segment (18) on one side of the slot which is generally rigid and inflexible and a second segment (19) on the other side of the slot which is resilient and flexible;
whereby the progressive insertion of a conduit into the bore along the slot will cause the second segment initially to flex away from the first segment until the conduit enters the bore whereafter the second segment will resile and urge the conduit against the blade, so that relative rotation between the tool and the pipe about the predetermined axis will result in the severing of the conduit; and
**in that** the second segment (19) is made of the same material as the first segment (18) but is hollow so as to define inner and outer walls (22, 20) sufficiently thin to provide the necessary flexibility and resilience.

2. A tool according to Claim 1, wherein the tool is generally cylindrical about said predetermined axis.

3. A tool according to Claim 1 or Claim 2, wherein the cutting edge of said blade, which is in said bore, is linear.

4. A tool according to any one of Claim 1 or Claim 2, wherein the cutting edge of said blade, which is in said bore, is arcuate.

5. A tool according to Claim 1 or Claim 2, wherein said blade comprises a cutting disc which is rotatably supported by the body.

6. A tool according to any preceding claim, wherein the width of said slot (12) at said bore is at least 5% smaller than said predetermined diameter when the second portion is in its relaxed state.

7. A tool according to any one of Claims 1 to 5, wherein when the second portion is in its relaxed state, the width of the slot at said bore is at least 10% smaller than said predetermined diameter.

8. A tool according to any preceding claim, wherein one side wall of said slot has a surface adjacent said bore which is substantially tangential to the bore.

9. A tool according to Claim 8, wherein the other side wall (16) of the slot has a surface (26) which extends substantially radially of the slot.

10. A tool according to any preceding claim, wherein said conduit is a corrugated conduit having a plurality of axially spaced peaks and troughs, and wherein said tool includes a rib or ribs projecting inwardly generally at right angles to said predetermined axis, said rib extending around all or part of said bore and along opposite faces of said slot and sized to engage a said trough or troughs of the conduit, the rib locating said cutting blade to engage and cut said conduit around its diameter.

11. A tool according to any preceding claim, including a keep cylinder comprising a cylindrical body arranged to engage said bore, said cylindrical body having a central groove to accommodate said cutting blade, and flanges at opposite ends to engage opposite end faces of the tool to inhibit axial displacement of the cylindrical body relative to the tool.

12. A tool according to any preceding claim, wherein said first portion includes a circumferentially extending channel sized to accommodate a nozzle to be severed, and including a secondary blade extending transversely of said channel so as to sever any nozzle inserted into the channel and drawn therealong.

13. A tool according to Claim 1, wherein the bore has a first section extending from one axial end and having a first predetermined diameter and a second section extending from the other axial end and having a second predetermined diameter, and including a second cutting blade, the first mentioned cutting blade being located in said first section of the bore and the second cutting blade being located in the second section of the bore, the smaller diameter section of the bore having a well therein extending between the cutting blade therein and the larger section of the bore to accommodate the free end of the conduit of larger diameter when inserted into the larger diameter section of the bore, whereby the tool can cut conduits of two difference diameters.

## Patentansprüche

1. Werkzeug zum Schneiden eines zylindrischen Rohrs mit einem vorbestimmten Außendurchmesser, wobei das besagte Werkzeug einen Körper (1) umfasst, der eine Bohrung (10) eines Durchmessers aufweist, der im Wesentlichen gleich dem besagten vorbestimmten Durchmesser ist und sich entlang einer vorbestimmten Achse durch den Körper erstreckt, sich ein Schlitz (12) von einer Außenfläche des Körpers zur Bohrung in der allgemeinen Richtung einer ersten Ebene erstreckt, welche die besagte Achse enthält und sich ein Schneidemesser (8) in die besagte Bohrung entlang einer Ebene erstreckt, die sich rechtwinklig zur besagten vorbestimmten Achse um ein Maß erstreckt, das die Dicke der Rohrwand überschreitet; **dadurch gekennzeichnet, dass**:
sich der besagte Schlitz derart verjüngt, dass seine Breite fortschreitend mit Abstand von der Außenfläche des Körpers zum Außenumfang der besagten Bohrung abnimmt, wobei die besagte Breite an der besagten Außenfläche des Körpers den besagten vorbestimmten Durchmesser überschreitet und an der besagten Bohrung kleiner als der besagte vorbestimmte Durchmesser ist;
dass der Körper aus zwei ähnlichen halben Teilen (2A, 2B) gebildet ist, die nebeneinander entlang der Achse montiert sind und die zwischen ihnen eingelegte Schneideklinge (8) stützen;
dass der Körper durch ein erstes Segment (18) auf einer Seite des Schlitzes, der generell starr und unflexibel ist und einem zweiten Segment (19) auf der anderen Seite des Schlitzes gebildet ist, das nachgiebig und flexibel ist;
wodurch das fortschreitende Einbringen eines Rohrs in die Bohrung entlang des Schlitzes bewirken wird, dass sich das zweite Segment anfänglich vom ersten Segment weg biegt, bis das Rohrs in die Bohrung eintritt, wonach das zweite Segment zurückschnellen und das Rohr gegen die Klinge drängen wird, sodass relative Rotation zwischen dem Werkzeug und dem Rohr um die vorbestimmte Achse herum zum Abtrennen des Rohrs führen wird; und
dass das zweite Segment (19) aus dem gleichen Material wie das erste Segment (18) hergestellt ist, aber hohl ist, um Innen- und Außenwände (22, 20) ausreichend dünn zu definieren, um die erforderliche Flexibilität und Rückfederung bereitzustellen.

2. Werkzeug nach Anspruch 1, wobei das Werkzeug um die besagte vorbestimmte Achse generell zylindrisch ist.

3. Werkzeug nach Anspruch 1 oder Anspruch 2, wobei die Schneidekante der besagten Klinge, die sich in der besagten Bohrung befindet, linear ist.

4. Werkzeug nach einem beliebigen des Anspruchs 1 oder Anspruchs 2, wobei die Schneidekante, der besagten Klingen, die sich in der besagten Bohrung befindet, bogenförmig ist.

5. Werkzeug nach Anspruch 1 oder Anspruch 2, wobei die besagte Klinge eine Schneidescheibe umfasst, die vom Körper drehbar gestützt wird.

6. Werkzeug nach einem beliebigen vorhergehenden Anspruch, wobei die Breite des besagten Schlitzes (12) an der besagten Bohrung zumindest 5% kleiner als der besagte vorbestimmte Durchmesser ist, wenn sich der zweite Teil in seinem relaxierten Zustand befindet.

7. Werkzeug nach einem beliebigen der Ansprüche 1 bis 5, wobei, wenn sich der zweite Teil in seinem relaxierten Zustand befindet, die Breite des Schlitzes an der besagten Bohrung zumindest 10% kleiner als der besagte vorbestimmte Durchmesser ist.

8. Werkzeug nach einem beliebigen vorhergehenden Anspruch, wobei einen Seitenwand des besagten Schlitzes eine Fläche angrenzend an die besagte Bohrung auf weist, die im Wesentlichen tangential zur Bohrung ist.

9. Werkzeug nach Anspruch 8, wobei die andere Seitenwand (16) des Schlitzes eine Fläche (26) aufweist, die sich im Wesentlichen radial des Schlitzes erstreckt.

10. Werkzeug nach einem beliebigen vorhergehenden Anspruch, wobei das besagte Rohr ein Wellrohr ist, das eine Vielheit von axial beabstandeten Spitzen und Mulden aufweist und, wobei das besagte Werkzeug eine Rippe oder Rippen einschließt, die nach innen gerichtet generell rechtwinklig zur besagten vorbestimmten Achse hervorstehen, wobei sich die besagte Rippe um die ganze oder einen Teil der besagten Bohrung und entlang gegenüberliegenden Flächen des besagten Schlitzes erstreckt und bemessen ist, einen besagten Trog oder Tröge des Rohrs in Eingriff zu bringen , wobei die Rippe die besagte Schneideklinge positioniert, um das besagte Rohr um seinen Durchmesser herum in Eingriff zu bringen und zu schneiden.

11. Werkzeug nach einem beliebigen vorhergehenden Anspruch, das einen Haltezylinder einschließt, der einen zylindrischen Körper umfasst, der eingerichtet ist, die besagte Bohrung in Eingriff zu bringen, wobei der besagte zylindrische Körper eine mittige Nut aufweist, um die besagte Schneideklinge aufzunehmen und Flansche an gegenüberliegenden Enden aufweist, um gegenüberliegende Stirnflächen des Werkzeugs in Eingriff zu bringen, um axiale Verschiebung des zylindrischen Körpers relativ zum Werkzeug zu inhibieren.

12. Werkzeug nach einem beliebigen vorhergehenden Anspruch, wobei der besagte erste Teil einen sich zirkumferenziell erstreckenden Kanal einschließt, der bemessen ist, einen zu trennenden Rohrstutzen aufzunehmen und eine zweite Klinge einschließt, die sich quer des besagten Kanals erstreckt, um irgendeinen Rohrstutzen zu trennen, der in den Kanal eingebracht und dort entlang gezogen wird.

13. Werkzeug nach Anspruch 1, wobei die Bohrung einen ersten Abschnitt aufweist, der sich von einem axialen Ende erstreckt und einen ersten vorbestimmten Durchmesser aufweist und einen zweiten Abschnitt aufweist, der sich vom anderen axialen Ende erstreckt und einen zweiten vorbestimmten Durchmesser aufweist und eine zweite Schneideklinge einschließt, wobei sich die zuerst erwähnte Schneideklinge im besagten ersten Abschnitt der Bohrung befindet und sich die zweite Schneideklinge im zweiten Abschnitt der Bohrung befindet, wobei der Abschnitt kleineren Durchmessers der Bohrung eine Vertiefung darin aufweist, die sich zwischen der Schneideklinge darin und dem größeren Abschnitt der Bohrung erstreckt, um das freie Ende des Rohrs größeren Durchmessers aufzunehmen, wenn dieses in den Abschnitt größeren Durchmessers des Rohrs eingebracht wird, wodurch das Werkzeug Rohre zweier verschiedener Durchmesser schneiden kann.

## Revendications

1. Un outil pour couper un conduit cylindrique ayant un diamètre externe prédéterminé, ledit outil comprenant un corps (1) ayant un alésage (10) d'un diamètre essentiellement égal audit diamètre prédéterminé et s'étendant le long d'un axe prédéterminé dans le corps, une fente (12) s'étendant depuis une surface externe du corps à l'alésage dans le sens général d'un premier plan contenant ledit axe, et une lame de coupe (8) s'étendant dans ledit alésage le long d'un plan s'étendant perpendiculairement audit axe prédéterminé d'une distance supérieure à l'épaisseur de la paroi dudit conduit ; **caractérisé en ce que** :
ladite fente s'effile de sorte que sa largeur diminue progressivement avec la distance entre la surface externe du corps et la circonférence externe dudit alésage, ladite largeur à ladite surface externe du corps étant supérieure audit diamètre prédéterminé, et audit alésage étant plus petite que ledit diamètre prédéterminé ;
**en ce que** le corps est formé de deux demi-parties similaires (2A, 2B) montées ensemble côte à côte le long de l'axe et soutenant la lame de coupe (8) en sandwich entre celles-ci ;
**en ce que** le corps est formé par un premier segment (18) d'un côté de la fente qui est généralement rigide et inflexible et par un second segment (19) de l'autre côté de la fente qui est élastique et flexible ;
grâce à quoi l'insertion progressive d'un conduit dans l'alésage le long de la fente amènera le second segment d'abord à fléchir et s'écarter du premier segment jusqu'à ce que le conduit pénètre dans l'alésage après quoi le second segment se relâchera et poussera le conduit contre la lame de sorte que la rotation relative entre l'outil et le tuyau autour de l'axe prédéterminé amènera le tuyau à être sectionné ; et
**en ce que** le second segment (19) est fabriqué dans le même matériau que le premier segment (18) mais est creux de façon à définir une paroi intérieure et une paroi extérieure (22, 20) suffisamment minces pour assurer la flexibilité et l'élasticité nécessaires.

2. Un outil selon la revendication 1, où l'outil est généralement cylindrique autour dudit axe prédéterminé.

3. Un outil selon la revendication 1 ou la revendication 2, où l'arête coupante de ladite lame qui est dans ledit alésage, est linéaire.

4. Un outil selon l'une quelconque de la revendication 1 ou la revendication 2, où l'arête coupante de ladite lame qui est dans ledit alésage, est arquée.

5. Un outil selon la revendication 1 ou la revendication 2, où ladite lame comprend un disque de coupe qui est supporté de manière rotative par le corps.

6. Un outil selon l'une quelconque des revendications précédentes, où la largeur de ladite fente (12) audit alésage est au moins 5% plus petite que ledit diamètre prédéterminé lorsque la seconde partie est dans son état relâché.

7. Un outil selon l'une quelconque des revendications 1 à 5, où lorsque la seconde partie est dans son état relâché, la largeur de la fente audit alésage est au moins 10% plus petite que ledit diamètre prédéterminé.

8. Un outil selon l'une quelconque des revendications précédentes, où une paroi latérale de ladite fente a une surface adjacente audit alésage qui est essentiellement tangentielle à l'alésage.

9. Un outil selon la revendication 8, où l'autre paroi latérale (16) de la fente a une surface (26) qui s'étend essentiellement radialement à la fente.

10. Un outil selon l'une quelconque des revendications précédentes, où ledit conduit est un conduit ondulé ayant une pluralité de creux et de crêtes espacés axialement, et où ledit outil inclut une nervure ou des nervures saillant vers l'intérieur généralement perpendiculairement audit axe prédéterminé, ladite nervure s'étendant autour de tout ou d'une partie dudit alésage et le long des faces opposées de ladite fente et dimensionnée pour s'engager dans un ledit creux or lesdits creux du conduit, la nervure positionnant ladite lame de coupe pour s'engager dans et couper ledit conduit autour de son diamètre.

11. Un outil selon l'une quelconque des revendications précédentes, incluant un cylindre d'arrêt comprenant un corps cylindrique agencé pour s'engager dans ledit alésage, ledit corps cylindrique ayant une rainure centrale pour accueillir ladite lame de coupe, et des brides aux extrémités opposées pour s'engager dans les faces des extrémités opposées de l'outil afin d'interdire le déplacement axial du corps cylindrique par rapport à l'outil.

12. Un outil selon l'une quelconque des revendications précédentes, où ladite première partie inclut un canal s'étendant sur la circonférence dimensionné pour accueillir un embout à sectionner, et incluant une lame secondaire s'étendant transversalement audit canal de façon à sectionner tout embout inséré dans le canal et tiré le long de ce dernier.

13. Un outil selon la revendication 1, où l'alésage a une première section s'étendant d'une extrémité axiale et ayant un premier diamètre prédéterminé et une seconde section s'étendant de l'autre extrémité axiale et ayant un second diamètre prédéterminé, et incluant une seconde lame de coupe, la première lame de coupe mentionnée étant située dans ladite première section de l'alésage et la seconde lame de coupe étant située dans la seconde section de l'alésage, la section du plus petit diamètre de l'alésage ayant un puits s'étendant entre la lame de coupe et la plus grande section de l'alésage pour accueillir l'extrémité libre du conduit de plus grand diamètre lors de l'insertion dans la section de plus grand diamètre de l'alésage, grâce à quoi l'outil peut couper des conduits de deux différents diamètres.
